# EUROPEAN PATENT APPLICATION

(11) **EP 4 848 140 A1**
(43) Date of publication of application: **02.12.2026**
(21) Application number: 26181016.2
(22) Date of filing: 26.05.2026
(51) Int. Cl.: G06N 3/00, G06F 40/20

(54) **METHOD AND DEVICE FOR GENERATING SEQUENCE DATA**

(30) Priority: 28.05.2025 KR 20250070008; 10.07.2025 KR 20250093365
(71) Applicant: 42dot Inc., Seongnam-si, Gyeonggi-do 13449 (KR)
(72) Inventor: LIM, Yun Kyu, 13449 Seongnam-si, Sujeong-gu (KR); KIM, Hyung Yong, 13449 Seongnam-si, Sujeong-gu (KR); PARK, Ji Hwan, 13449 Seongnam-si, Sujeong-gu (KR); PARK, Jin Seok, 13449 Seongnam-si, Sujeong-gu (KR); KIM, Byeong Yeol, 13449 Seongnam-si, Sujeong-gu (KR); LEE, Han Bin, 13449 Seongnam-si, Sujeong-gu (KR)
(74) Representative: Meissner Bolte Partnerschaft mbB

(57) **Abstract**

The present disclosure relates to a method and device for generating sequence data. According to one embodiment of the present disclosure, provided is a method of generating sequence data, including: generating an input sequence by encoding input data; generating a reference sequence based on the input sequence using a first decoder; generating a first verification sequence based on the input sequence and the reference sequence using a second decoder; determining whether a preset end condition is satisfied based on the reference sequence and the first verification sequence; and, based on the end condition not being satisfied, updating the reference sequence based on the input sequence using the second decoder.

## Description

### BACKGROUND

### 1. Field

The present disclosure relates to a method and device for generating sequence data.

### 2. Description of Related Art

Research on sequence-to-sequence technology, which analyzes input sequences to generate corresponding output sequences, is in active progress in various technical fields such as natural language processing, speech recognition, speech synthesis, machine translation, and time-series data forecasting.

While processing sequence data in real-time or high-volume environments requires complex computation for high accuracy, rapid processing requires lightweighting or frame skipping, which may compromise accuracy. Therefore, there is a need for research and development of new decoding techniques to resolve this tradeoff relationship between accuracy and speed.

The background art described above is technical information that the inventor(s) possessed for deriving the present disclosure or acquired in the process of deriving the present disclosure and cannot necessarily be considered as prior art disclosed to the general public prior to the filing of the present disclosure.

### SUMMARY

The present disclosure provides a method and device for generating sequence data. The goals to be achieved by the present disclosure are not limited to the one described above, and other goals and advantages of the present disclosure not described above may also be understood by the following description and be more clearly understood by the embodiments of the present disclosure. In addition, it is to be understood that the goals and advantages to be achieved by the present disclosure may be realized by the means and combinations described in the appended claims.

As technical solutions to achieve the technical goal(s) described above, one aspect of the present disclosure may provide a method of generating sequence data, the method including: generating an input sequence by encoding input data; generating a reference sequence based on the input sequence using a first decoder; generating a first verification sequence based on the input sequence and the reference sequence using a second decoder; determining whether a preset end condition is satisfied based on the reference sequence and the first verification sequence; and, based on the end condition not being satisfied, updating the reference sequence based on the input sequence using the second decoder.

Another aspect of the present disclosure may provide a device for generating sequence data, the device including: a memory storing at least one program; and a processor configured to operate by executing the at least one program, wherein the processor is configured to: generate an input sequence by encoding input data; generate a reference sequence based on the input sequence using a first decoder; generate a first verification sequence based on the input sequence and the reference sequence using a second decoder; determine whether a preset end condition is satisfied based on the reference sequence and the first verification sequence; and based on the end condition not being satisfied, update the reference sequence based on the input sequence, using the second decoder.

Still another aspect of the present disclosure may provide a non-transitory computer-readable recording medium that stores a program for executing, on a computer, the method of one aspect of the present disclosure.

Other aspects, features and advantages other than those described above will become apparent from the following drawings, claims, and detailed description.

### BRIEF DESCRIPTION OF THE DRAWINGS

The accompanying drawings attached hereto illustrate embodiments of the present disclosure and, together with the following detailed description of the disclosure, serve to assist in further understanding of the technical idea of the present disclosure; therefore, the present disclosure should not be interpreted as being limited to matters described in the drawings, in which:
FIG. 1 is a diagram illustrating a schematic configuration of a system including a generation device;
FIG. 2 is a diagram illustrating an example of a method of operating a generation device;
FIG. 3 is a diagram illustrating an encoder, a first decoder, and a second decoder according to one embodiment;
FIG. 4 is a diagram illustrating an example of a process of determining an output sequence according to one embodiment;
FIGS. 5 through 7 are diagrams illustrating a process of updating a reference sequence based on a patch according to one embodiment;
FIGS. 8 and 9 are diagrams illustrating a process of comparing a teacher forcing mode and an autoregressive mode according to one embodiment; and
FIG. 10 is a block diagram illustrating a data generation device according to one embodiment.

### DETAILED DESCRIPTION

The advantages and features of the present disclosure and the methods for achieving them will become apparent with reference to the embodiments described in detail herein, together with the accompanying drawings. However, the present disclosure is not limited to the embodiments described below, but may be implemented in various forms, and should be understood to include all modifications, equivalents, or substitutes within the spirit and technical scope of the present disclosure. The embodiments described below are provided to make the present disclosure complete and assist those skilled in the art in fully understanding the scope of the present disclosure. In describing the present disclosure, a detailed description of a related known technology is omitted when it is deemed to obscure the gist of the present disclosure.

Terms used herein are merely to describe specific embodiments and are not intended to limit the present disclosure. Unless otherwise defined herein, all terms used herein have the meanings as generally understood by those skilled in the art to which this disclosure pertains.

In the present disclosure, a singular expression includes a plural expression unless the context clearly indicates otherwise. In addition, terms such as "include," "have," or the like are intended to specify the presence of the features, numbers, steps, operations, components, parts, or combinations thereof described in this disclosure, and should be understood as not precluding the presence or addition of one or more other features, numbers, steps, operations, components, parts, or combinations thereof.

In addition, terms including ordinal numbers, such as "first" or "second," used herein may be intended to describe various components, but the components should not be limited by these terms. The terms are rather used only for the purpose of distinguishing one component from another.

In the present disclosure, phrases such as "in one embodiment," "according to one embodiment," "related to one embodiment," "according to the implementation of one embodiment," or the like do not necessarily refer to the same embodiment. In addition, throughout the specification, "embodiments" or "examples" are arbitrary distinctions to facilitate the explanation of the present disclosure, and the respective embodiments or examples do not need to be mutually exclusive. For example, the configurations or features described for the explanation of one embodiment may be applied to and/or implemented in other embodiments and may be modified, applied, and/or implemented without departing from the scope of the present disclosure.

Some embodiments of the present disclosure may be represented by functional blocks and various processing steps. Some or all of these functional blocks may be implemented in various numbers of hardware and/or software elements that execute specific functions. For example, the functional blocks of the present disclosure may be implemented by one or more microprocessors or by circuit elements for a given function.

For example, the functional blocks of the present disclosure may be implemented in various programming or scripting languages. The functional blocks may be implemented as algorithms that run on one or more processors. In addition, the present disclosure may employ the related art for electronic configuration, signal processing, and/or data processing. Terms such as "mechanism," "element," "means," and "configuration" may be used broadly and are not limited to mechanical and physical ones. In addition, terms such as "- er/or" and "- module" refer to a unit that processes at least one function or operation, which may be implemented in hardware or software or in a combination of hardware and software.

In addition, connecting lines or connecting members between components depicted in the drawings are merely illustrative of functional connections and/or physical or circuit connections. In actual devices, connections between components may be represented by various replaceable or added functional connections, physical connections, or circuit connections.

In addition, some components in the drawings may be depicted with slightly exaggerated sizes or proportions. In addition, a component shown in one drawing may not be shown in another drawing.

Hereinafter, embodiments of the present disclosure will be described in detail with reference to the accompanying drawings.

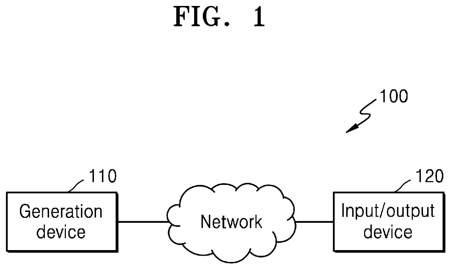

FIG. 1 is a diagram illustrating a schematic configuration of a system including a generation device.

Referring to FIG. 1, a system 100 according to one embodiment may include a generation device 110 and an input/output device 120.

The generation device 110 of the present disclosure refers to one of various types of electronic devices that generate a specific type of output data using a specific type of input data. For example, the generation device 110 may include an electronic device used in a speech recognition process that generates text data from audio data or a speech synthesis process that generates audio data from text data. The generation device 110 may also include, but is not limited to, an electronic device used in a translation process.

In one embodiment, the generation device 110 may be any type of server device that manages a web and/or application (or app) providing various services for generating output data using input data provided by a user, and may be a server device that manages the homepage of various service platforms, but is not limited thereto.

In another embodiment, the generation device 110 may include a mobile electronic device having mobility, and may be implemented as, for example, a smartphone, personal computer (PC), tablet PC, smart television (TV), personal digital assistant (PDA), laptop, media player, navigation system, and other mobile electronic devices, but is not limited thereto.

Meanwhile, the input/output device 120 of the present disclosure refers to one of various types of electronic devices that obtain input data provided by a user and provide output data generated by the generation device 110 to the user. For example, the input/output device 120 may include, but is not limited to, an electronic device that obtains input data in the form of text and outputs a corresponding voice signal, or obtains input data in the form of a voice signal and outputs a corresponding text to provide it to a user.

The input/output device 120 of one embodiment may include a device that provides an input interface for receiving various types of input data, such as text, voice signals, and/or images, from a user, and provides an output interface for providing various types of output data, such as text, voice signals, and/or images, to the user.

The input/output device 120 of one embodiment may be a smartphone, PC, tablet PC, smart TV, mobile phone, PDA, laptop, media player, micro server, global positioning system (GPS) device, e-book terminal, digital broadcasting terminal, navigation system, kiosk, MP3 player, digital camera, home appliance, device equipped with a camera, and other mobile or non-mobile computing devices. The input/output device 120 may also be, but is not limited to, a wearable device such as a watch, eye glasses, a hair band, and a ring equipped with communication functions and data processing functions.

In addition, in one embodiment, the input/output device 120 may be implemented as a single electronic device, or may be implemented with an input device that provides an input interface (e.g., a microphone, keyboard, touchscreen, etc.) and an output device that provides an output interface (e.g., a speaker, display device, etc.) separated from each other. In addition, in one embodiment, the system 100 may be implemented as a single electronic device, and in this case, the input/output device 120 and the generation device 110 may be implemented as respective functional elements within the single electronic device.

Each of the components illustrated in FIG. 1 may communicate with one another and/or with other external devices through a network. The network is a comprehensive data communication network that enables different entities to communicate smoothly with one another, and may include wired internet, wireless internet, and mobile wireless communication networks. For example, the network may include, as non-limiting examples, a local area network (LAN), a wide area network (WAN), a value-added network (VAN), a mobile radio communication network, a satellite communication network, and combinations thereof. Additionally, wireless communication may include, but is not limited to, wireless LAN (Wi-Fi), Bluetooth, Bluetooth Low Energy (BLE), ZigBee, Wi-Fi Direct (WFD), ultra-wideband (UWB), infrared communication (e.g., infrared data association (IrDA)), or near-field communication (NFC).

In one embodiment, the input/output device 120 may transmit input data entered by a user to the generation device 110 by performing communication through the network. The generation device 110 may also transmit output data generated based on the input data to the input/output device 120 by performing communication through the network.

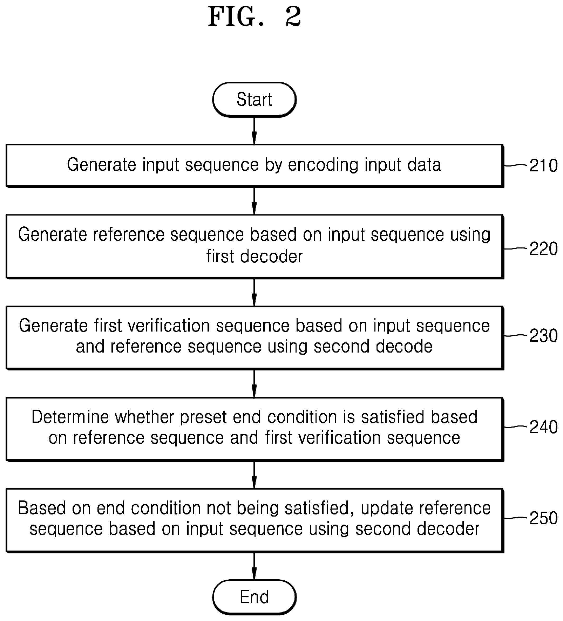

FIG. 2 is a diagram illustrating an example of a method of operating a generation device.

Referring to FIG. 2, in step 210, the generation device 110 may generate an input sequence by encoding input data.

In step 220, the generation device 110 may generate a reference sequence based on the input sequence, using a first decoder.

In step 230, the generation device 110 may generate a first verification sequence based on the input sequence and the reference sequence, using a second decoder.

In one embodiment, the generation device 110 may generate the first verification sequence using the second decoder in a teacher forcing mode.

In step 240, the generation device 110 may determine whether a preset end condition is satisfied based on the reference sequence and the first verification sequence.

In one embodiment, the end condition may be that the first verification sequence includes the reference sequence and an end token.

In step 250, based on the end condition not being satisfied, the generation device 110 may update the reference sequence based on the input sequence, using the second decoder.

In one embodiment, the generation device 110 may generate a patch based on the input sequence, using the second decoder. In this case, the patch may include a preset or fewer number of tokens.

In one embodiment, the generation device 110 may generate the patch using the second decoder in an autoregressive mode.

In one embodiment, the generation device 110 may identify an initial discrepancy position by comparing the reference sequence and the first verification sequence, and generate the patch from the initial discrepancy position.

In one embodiment, the generation device 110 may update the reference sequence based on the reference sequence and the patch.

In one embodiment, the generation device 110 may update the reference sequence by overwriting, with the patch, starting from the initial discrepancy position up to a reference position within the reference sequence. In this case, the reference position may be a position where a token identical to a last token of the patch is initially identified within a search range on the reference sequence that is set based on the initial discrepancy position, or the last position of the reference sequence.

In one embodiment, the generation device 110 may generate a second verification sequence based on the input sequence and the updated reference sequence, using the second decoder. Subsequently, it may determine whether the end condition is satisfied based on the updated reference sequence and the second verification sequence.

Meanwhile, based on the end condition being satisfied, the generation device 110 may determine the reference sequence as an output sequence, rather than performing step 250.

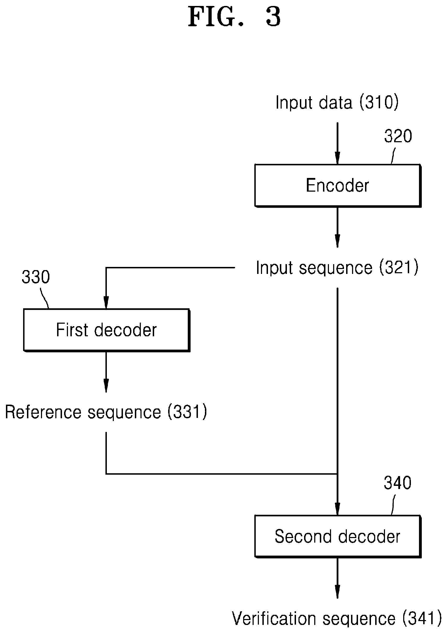

FIG. 3 is a diagram illustrating an encoder, a first decoder, and a second decoder according to one embodiment.

Referring to FIG. 3, the generation device 110 may use an encoder 320, a first decoder 330, and a second decoder 340 for a process of processing input data 310. In this case, the encoder 320, the first decoder 330, and the second decoder 340 may be construed as functional modules of the generation device 110, and may be implemented as individual hardware or may be implemented as a hardware element (e.g., at least one processor, etc.) that performs computational processing of the generation device 110 performs computational processing corresponding to the respective functional modules.

First, the generation device 110 may generate an input sequence 321 by encoding the input data 310. Here, the input data 310 refers to raw data or preprocessed data obtained by preprocessing the raw data. In the case of audio input, it may include data aligned along a time axis, such as, raw audio waveforms, log-mel spectrograms, mel-frequency cepstral coefficients (MFCCs), or the like. In the case of text input, it may include raw text, a token array converted into a sequence by a tokenizer, or the like. However, examples are not limited to the foregoing. In addition, the input sequence 321 refers to sequence data in which the input data 310 is encoded. In one embodiment, the input sequence 321 may include a latent representation sequence extracted from the input data 310. For example, the input sequence 321 may include embedding vectors corresponding to respective time steps or respective token positions.

In one embodiment, the generation device 110 may generate the input sequence 321 by encoding the input data 310 using the encoder 320. For example, the encoder 320 may be implemented as an artificial neural network (ANN)-based encoder. As an example, the encoder 320 may be implemented as a transformer encoder based on an attention mechanism. As another example, the encoder 320 may be implemented as an encoder based on a convolutional neural network (CNN) or a recurrent neural network (RNN).

Meanwhile, as another example, the encoder 320 may be implemented as, but is not limited to, an encoder based on a dimensionality reduction technique such as principal component analysis (PCA) or linear discriminant analysis (LDA).

Subsequently, the generation device 110 may use the input sequence 321 generated using the encoder 320 as an input to the first decoder 330 and the second decoder 340. That is, the first decoder 330 and the second decoder 340 may share one encoder, the encoder 320.

The generation device 110 may generate a reference sequence 331 based on the input sequence 321, using the first decoder 330. In this case, the reference sequence 331 may be a draft of an output sequence to be used to generate output data, and may represent an output of the first decoder 330 as a candidate sequence to be determined as a final output sequence after subsequent processes of verification and correction. For example, in a case where the output data is provided in a text form, the reference sequence 331 may include a token sequence including sub-word unit tokens.

Subsequently, the generation device 110 may generate a verification sequence 341 based on the input sequence 321 and the reference sequence 331, using the second decoder 340. In this case, the verification sequence 341 refers to an output of the second decoder 340 to be used to verify the reference sequence 331.

The verification sequence 341 may be implemented as data having the same format as the reference sequence 331. For example, in a case where the output data is provided in a text form, the reference sequence 331 may include a token sequence including sub-word unit tokens, and the verification sequence 341 may also include a token sequence including sub-word unit tokens, similar to the reference sequence 331.

In one embodiment, the first decoder 330 and the second decoder 340 may each be implemented as an ANN-based decoder. For example, the ANN-based decoder may include, but is not limited to, a transformer decoder, token-and-duration transducer (TDT) decoder, connectionist temporal classification (CTC) decoder, consistency-regularized CTC (CR-CTC) decoder, RNN-transducer decoder, or the like.

The first decoder 330 and the second decoder 340 may be implemented as different decoders. In one embodiment, the first decoder 330 may be implemented as a decoder having a relatively faster inference speed compared to the second decoder 340. In addition, in one embodiment, the second decoder 340 may be implemented as a decoder having a relatively higher accuracy compared to the first decoder 330. For example, the first decoder 330 may be implemented as a decoder having a relatively faster inference speed compared to a transformer decoder, such as, for example, a TDT decoder, a CTC decoder, a CR-CTC decoder, an RNN-transducer decoder, or the like, and the second decoder 340 may be implemented as a decoder having a relatively higher accuracy, such as, for example, a transformer decoder.

In one embodiment, the first decoder 330 may include a TDT decoder. In this case, the TDT decoder may simultaneously predict each token and the duration occupied by a corresponding token to rapidly determine a position of a subsequent token, and may skip an unnecessary frame calculation to significantly reduce inference latency.

In addition, the second decoder 340 may include a transformer decoder. In this case, the transformer decoder may perform multi-head self-attention and cross-attention to capture long- and short-term dependencies across an input sequence, and may produce a highly accurate token probability distribution. Meanwhile, the second decoder 340, implemented as the transformer decoder, may operate in different modes. For example, the second decoder 340 may operate in a teacher forcing mode or in an autoregressive mode.

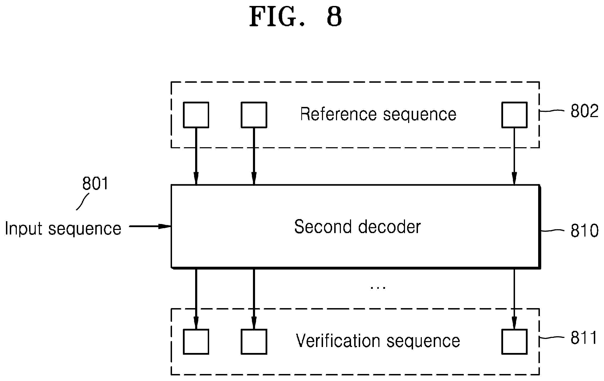

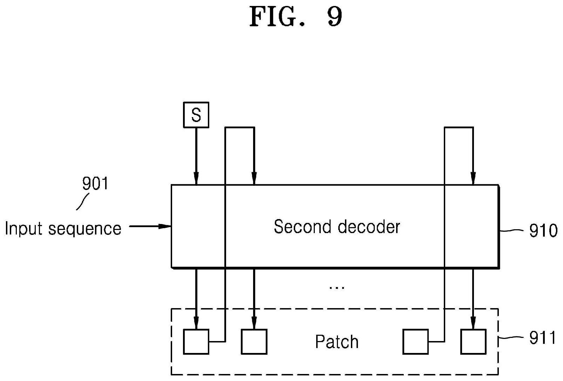

Since the transformer decoder operating in the teacher forcing mode operates by receiving a corresponding token of the reference sequence 331 as an input instead of a previous prediction by the decoder at each decoding step, it may output the verification sequence 341 at a high speed by using, as an input, the reference sequence 331 along with the input sequence 321. Meanwhile, the teacher forcing mode and the autoregressive mode will be described in detail later with reference to FIGS. 8 and 9.

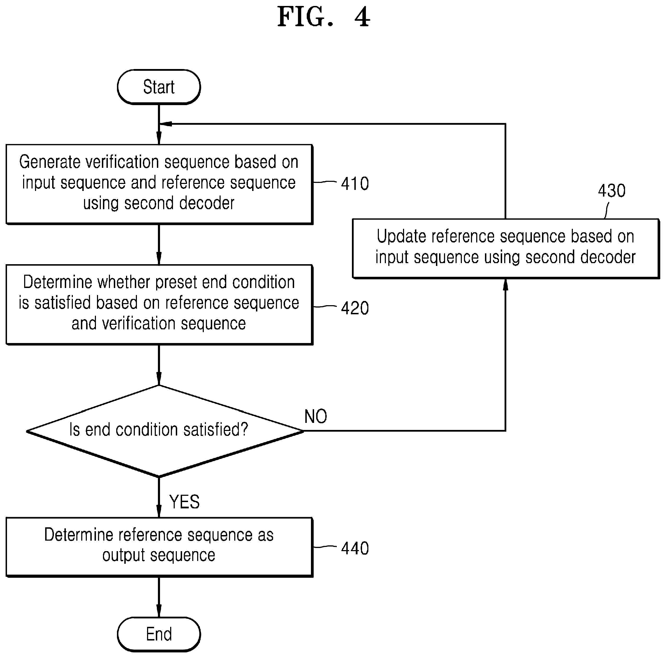

FIG. 4 is a diagram illustrating an example of a process of determining an output sequence according to one embodiment.

Referring to FIG. 4, in step 410, the generation device 110 may generate a verification sequence based on an input sequence and a reference sequence, using a second decoder. In this case, step 410 may correspond to step 230 illustrated in FIG. 2, and the verification sequence initially generated based on an initial reference sequence generated using a first decoder may be referred to as a first verification sequence.

In step 420, the generation device 110 may determine whether a preset end condition is satisfied based on the reference sequence and the verification sequence. For example, the generation device 110 may determine whether the preset end condition is satisfied based on the initial reference sequence generated using the first decoder and the first verification sequence.

In this case, the generation device 110 may perform step 430 when the end condition is not satisfied, and may perform step 440 when the end condition is satisfied.

Meanwhile, the second decoder may be configured to output an end token, based on the verification sequence being ended normally. That is, the end token may be construed as an end-of-sequence (EOS) token indicating that the verification sequence has ended normally and there are no additional tokens to be generated. For example, the second decoder does not output the end token when the verification sequence does not end normally, although the sequence length reaches a preset maximum length due to the occurrence of an iteration error (e.g., excessive generation of identical tokens) or the like. When the second decoder does not output the end token, the verification sequence may not include the end token.

In one embodiment, the end condition may be that the verification sequence includes the reference sequence and the end token. For example, the end condition may be that the first verification sequence includes the initial reference sequence generated using the first decoder and the end token.

This may prevent a sequence from falling into an infinite loop due to the iteration error, thereby improving the stability in the generation of an output sequence.

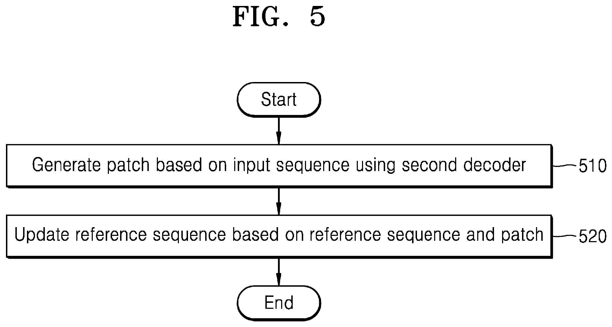

In step 430, the generation device 110 may update the reference sequence based on the input sequence, using the second decoder. That is, based on the end condition not being satisfied, the generation device 110 may update the reference sequence based on the input sequence, using the second decoder. Meanwhile, an example of a specific process of updating a reference sequence will be described later in detail with reference to FIGS. 5 through 7 or the like.

After step 430, steps 410 and 420 may be performed repeatedly. That is, the reference sequence may be repeatedly updated until the end condition is satisfied, a new verification sequence may be generated based on the updated reference sequence, and whether the end condition is satisfied may be repeatedly determined based on the updated reference sequence and the new verification sequence.

For example, when it is determined that the preset end condition is not satisfied based on the initial reference sequence generated using the first decoder and the first verification sequence, the generation device 110 may update the reference sequence using the second decoder. Subsequently, the generation device 110 may generate a second verification sequence based on the input sequence and the updated reference sequence using the second decoder, and determine whether the end condition is satisfied based on the updated reference sequence and the second verification sequence.

In addition, since the generation device 110 may repeatedly generate verification sequences, reusing an attention operation result for a preceding interval of the reference sequence 331 that has not been changed by maintaining a key/value cache of the second decoder may reduce the computational amount.

In step 440, the generation device 110 may determine the reference sequence as an output sequence. That is, based on the end condition being satisfied, the generation device 110 may determine the reference sequence as the output sequence. For example, in a case where step 420 of determining the end condition and step 430 of updating are repeated n times until the end condition is satisfied, the generation device 110 may determine the reference sequence updated n times as the output sequence.

Subsequently, the generation device 110 may generate output data based on the output sequence. For example, the output sequence may include a sub-word unit token array, and the output data may include a human-readable natural language text string. For another example, the output sequence may include a frame sequence for generating an audio waveform, and the output data may include a voice signal in a pulse code modulation (PCM) format.

FIGS. 5 through 7 are diagrams illustrating a process of updating a reference sequence based on a patch according to one embodiment;

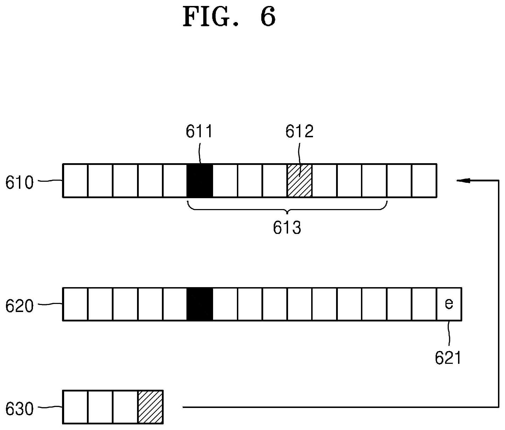

Referring to FIGS. 5 and 6, steps 510 and 520 illustrated in FIG. 5 may be construed as a specific example of step 430 illustrated in FIG. 4, and FIG. 6 illustrates a reference sequence 610, a verification sequence 620, and a patch 630, as sequence data in which unit data is arranged. Meanwhile, in one embodiment, the verification sequence 620 may include an end token 621.

In step 510, the generation device 110 may generate the patch 630 based on an input sequence, using a second decoder. In this case, the patch 630 may be generated using the second decoder in an autoregressive mode, unlike the verification sequence 620 generated using the second decoder in a teacher forcing mode.

In this case, the patch 630 may include a preset or fewer number of tokens. The generation device 110 may generate the patch 630 by generating tokens until an end token is generated or until a preset maximum number of tokens is output.

Meanwhile, the length of the patch 630 may be appropriately set, in consideration of a balance between acceptable latency and accuracy. As an example, the number of tokens constituting the patch 630 may be set to four (4). While longer patch lengths may enable correction of multiple errors at once to reduce the number of iterations of a verification loop, a smaller number of errors than the number of patches may increase latency due to an increasing burden of unnecessary additional computation. Conversely, shorter patch lengths may reduce the probability of the burden of unnecessary additional computation because the range of the correction is shorter, but may increase the number of verifications required to resolve errors, increasing total latency.

In one embodiment, the generation device 110 may compare the reference sequence 610 and the verification sequence 620 to identify an initial discrepancy position 611, and generate the patch 630 from the initial discrepancy position 611. Here, the initial discrepancy position 611 refers to an index indicative of an initial point where, when the reference sequence 610 and the verification sequence 620 are compared sequentially in index order starting from a first token, one of the two sequences ends first or the token values of the same index become different.

That is, the generation device 110 may identify the initial discrepancy position 611 on the reference sequence 610 by identifying, in index order, the point where a difference between the reference sequence 610 and the verification sequence 620 occurs. Subsequently, the generation device 110 may generate the patch 630 including the preset or fewer number of tokens, starting with a token of the index corresponding to the initially identified discrepancy position 611.

As an example, the maximum number of tokens in the patch 630 may be set to four (4). In this case, the generation device 110 may generate the patch 630 using the second decoder after identifying the initial discrepancy position 611 by comparing the reference sequence 610 and the verification sequence 620. For example, when the index of the initial discrepancy position 611 is x, the generation device 110 may sequentially generate four tokens having indices from x to x+3, using the second decoder in the autoregressive mode, to generate the patch 630. For another example, the generation device 110 may generate the patch 630 including fewer tokens than the maximum number of tokens, based on the second decoder generating an end token at a position corresponding to an index smaller than x+3.

In addition, the generation device 110 may minimize the range of attention computation that is newly calculated at each token prediction step by reusing a Key/Value cache accumulated up to a previous step while sequentially generating the tokens constituting the patch 630.

Meanwhile, the process of identifying the initial discrepancy position 611 may be accompanied by the process of determining whether the end condition is satisfied in step 420 illustrated in FIG. 4. For example, in a case where the initial discrepancy position 611 is not identified in step 420 and the verification sequence 620 includes the end token 621, the generation device 110 may determine that the end condition is satisfied and may not update the reference sequence 610. In a case where the initial discrepancy position 611 is identified in step 420, the generation device 110 may generate the patch 630 from the initial discrepancy position 611 to update the reference sequence 610.

In step 520, the generation device 110 may update the reference sequence 610 based on the reference sequence 610 and the patch 630. For example, the generation device 110 may update the reference sequence 610 by applying the patch 630 to the reference sequence 610.

In one embodiment, the generation device 110 may update the reference sequence 610 by overwriting, with the patch 630, a portion starting from the initial discrepancy position 611 to the reference position 612. In this case, the reference position 612 may be a position where the same token as the last token of the patch 630 is first identified within a search range 613 on the reference sequence 610 set based on the initial discrepancy position 611, or the last position of the reference sequence 610.

Accordingly, the generation device 110 may maintain a preceding interval on the reference sequence 610 whose consistency has already been verified through verification and locally correct a portion near the point at which the discrepancy occurred using the patch 630, thereby minimizing an inference time of the second decoder operating in the autoregressive mode while improving the accuracy of the output sequence.

In one embodiment, the search range 613 may be set based on the maximum number of tokens that is preset for the patch 630. For example, the search range 613 may include the number of tokens corresponding to a multiple (e.g., 2 times, etc.) of the preset maximum number of tokens, starting from the initial discrepancy position 611. For example, in a case where the maximum number of tokens in the patch 630 is set to four (4), the search range 613 may include eight (8) tokens, starting from the initial discrepancy position 611.

The generation device 110 may sequentially check the search range 613 and may, when the same token as the last token of the patch 630 is first identified within the search range 613, use that position as the reference position 612 to overwrite a portion from the initial discrepancy position 611 to the reference position 612 with the patch 630. Meanwhile, an interval between the initial discrepancy position 611 and the reference position 612 may differ. The patch 630 may substitute the same number of tokens in the reference sequence 610, but may also be used to update the reference sequence 610 through insertion or deletion.

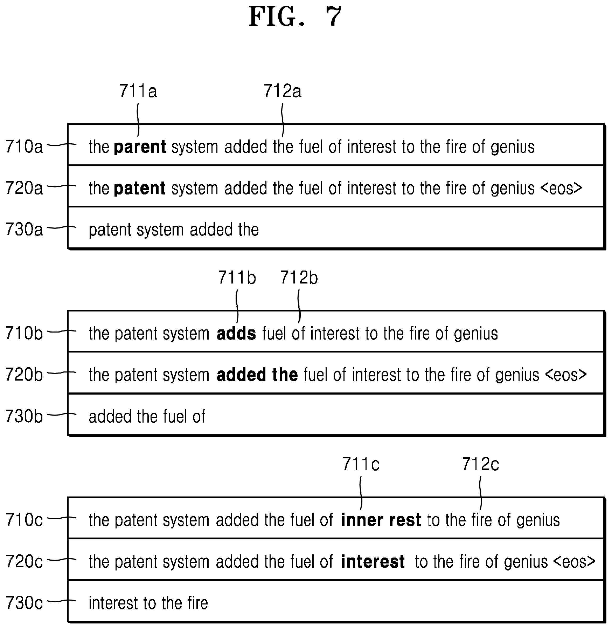

FIG. 7 illustrates examples of situations in which, with the maximum number of tokens in a patch 730 being four (4), a reference sequence 710 is updated through substitution, insertion, and deletion, respectively. The reference sequence 710, a verification sequence 720, the patch 730, an initial discrepancy position 711, and a reference position 712 illustrated in FIG. 7 may correspond to the reference sequence 610, the verification sequence 620, the patch 630, the initial discrepancy position 611, or the reference position 612 illustrated in FIG. 6, respectively.

For example, an initial discrepancy position 711a in a reference sequence 710a and a verification sequence 720a may be identified as a position corresponding to "parent." In this example, a patch 730a may include four tokens ("patent," "system," "added," and "the"), and a reference position 712a may be a position where the same token as the last token ("the") of the patch 730a is first identified within a search range. In this example, the reference sequence 710a, starting from the initial discrepancy position 711a to the reference position 712a, may be overwritten with the patch 730a, and a specific interval of the reference sequence 710a may be substituted by the same number of tokens constituting the patch 730a.

For another example, an initial discrepancy position 711b in a reference sequence 710b and a verification sequence 720b may be identified as a position corresponding to "adds." In this example, a patch 730b may include four tokens, and a reference position 712b may be a position where the same token as the last token ("of") of the patch 730b may be first identified within a search range. In this example, the three tokens from the initial discrepancy position 711b to the reference position 712b on the reference sequence 710b may be overwritten with the patch 730b consisting of the four tokens ("added," "the," "fuel," "of"), and one token may be added to the reference sequence 710b, increasing the total length by one token.

For still another example, an initial discrepancy position 711c in a reference sequence 710c and a verification sequence 720c may be identified as a position corresponding to "inner." In this example, a patch 730c may include four tokens ("interest," "to," "the," "fire"), and a reference position 712c may be a position where the same token as the last token ("fire") of the patch 730c may be first identified within a search range. In this example, five tokens from the initial discrepancy position 711c to the reference position 712c on the reference sequence 710c may be overwritten with the patch 730c consisting of the four tokens, and one token may be deleted from the reference sequence 710c, decreasing the total length by one token.

Here, it should be noted that the patch 730 is generated separately from the verification sequence 720 generated by the second decoder of the teacher forcing mode, and accordingly, the patch 730 may include tokens different from those in an interval corresponding to the patch 730 on the verification sequence 720.

Referring back to FIG. 6, the example illustrated in FIG. 6 may be understood as an example in which the reference sequence 610 is updated in the form of deletion, as the five tokens from the initial discrepancy position 611 to the reference position 612 are overwritten by the patch 630 consisting of four tokens.

Additionally, in one embodiment, unlike the example illustrated in FIG. 6, the initial discrepancy position 611 may be the last position of the reference sequence 610, and the reference position 612 may be the same as the initial discrepancy position 611. Meanwhile, in the present disclosure, the "last position" of the reference sequence 610 refers to a position following a corresponding token (i.e., an empty space), rather than the position of the last token constituting the reference sequence 610. Therefore, that the reference position 612 is the last position of the reference sequence 610 indicates that a range to which the patch 630 is applied exceeds an existing range of the reference sequence 610.

For example, in a case where the reference sequence 610 and the verification sequence 620 are completely identical, but the verification sequence 620 does not include an end token, or in a case where the verification sequence 620 includes a token at a position following the last token of the reference sequence 610, the initial discrepancy position 611 may be identified as the last position of the reference sequence 610.

Additionally, in a case where the initial discrepancy position 611 is the last position of the reference sequence 610, the reference position 612 may also be the last position of the reference sequence 610, and accordingly, the patch 630 may be inserted to follow the reference sequence 610.

Meanwhile, the maximum number of tokens in the patch 630 may be set, and accordingly, even if an iteration error unique to the transformer decoder occurs during a process of generating the patch 630, it may be forced to return to the verification process after the prediction of the maximum number of tokens, suppressing errors in the output sequence.

Additionally, to effectively suppress iteration errors, in a case where, although the reference sequence 610 and the verification sequence 620 are completely identical, the verification sequence 620 does not include an end token, or in a case where the verification sequence 620 includes a token at a position following the last token of the reference sequence 610, the generation device 110 may generate the patch 630 with a number of tokens less than or equal to the maximum number of tokens, update the reference sequence 610 based on the patch 630, and then determine the updated reference sequence 610 as the output sequence without an additional verification process.

This may enable an escape from infinite loops where a probability of an end token being generated is low even with the iteration of the additional verification, thereby minimizing system latency and improving prediction accuracy.

FIGS. 8 and 9 are diagrams illustrating a process of comparing a teacher forcing mode and an autoregressive mode according to one embodiment.

Referring to FIG. 8, the generation device 110 may generate a verification sequence 811 by using an input sequence 801 generated by an encoder and a reference sequence 802 generated by a first decoder as an input to a second decoder 810 operating in a teacher forcing mode. In this case, the second decoder 810 of the teacher forcing mode may process all tokens in parallel in one step by using, as an input, tokens at the same positions of the reference sequence 802 instead of a previous prediction at each decoding step, thereby improving a prediction speed compared to a sequential prediction.

That is, since the generation of the verification sequence 811 may involve only a single parallel operation process, rapid verification may be performed while the high prediction accuracy of the second decoder 810 is maintained.

Referring to FIG. 9, the generation device 110 may generate a patch 911 by using the same input sequence 901 as an input to a second decoder 910 operating in an autoregressive mode. Meanwhile, the second decoder 910 illustrated in FIG. 9 may represent the same decoder as the second decoder 810 illustrated in FIG. 8, with an operating mode being switched from a teacher forcing mode to an autoregressive mode.

That is, the second decoder 810 used for verifying a reference sequence and the second decoder 910 used for updating a reference sequence may be implemented as the same decoder. For example, the second decoder 810 or 910 may include a transformer decoder.

In the autoregressive mode, the second decoder 910 may use, as an input, a token predicted up to an immediately previous point in time to calculate a token probability distribution based on context accumulated for each token prediction step, and may accordingly generate a patch 911 that accurately reflects the context.

The second decoder 810 or 910 may generate the verification sequence 811 and the patch 911 based on the input sequence 801 or 901, which is an output of the encoder used in a process of generating a reference sequence by the first decoder, and may not require a separate feature extraction process. This may accordingly reduce the computational load and improve the computational processing speed, and may consistently maintain the embedding representations of the context interpreted by the first decoder and the second decoder 810 or 910, thereby also reducing the probability of error occurrence due to semantic inconsistency between decoders.

In addition, since the parallel operation of the second decoder 810 operating in the teacher forcing mode is used during the verification process, and the sequential operation of the second decoder 910 operating in the autoregressive mode is used only during the process of generating the patch 911 of a relatively short length, it may be possible to secure the output quality similar to that in autoregressive decoding while reducing the overall inference latency by the reduced number of steps in which the decoder is called.

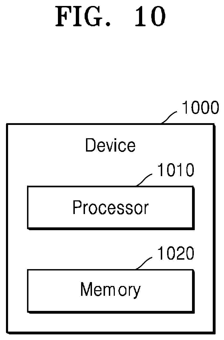

FIG. 10 is a block diagram illustrating a data generation device according to one embodiment. A device 1000 illustrated in FIG. 10 may correspond to the generation device 110 illustrated in FIG. 1.

Referring to FIG. 10, the device 1000 may include a processor 1010 and a memory 1020. Only the components related to the embodiments described herein are illustrated in the device 1000 of FIG. 10. Therefore, those skilled in the art will understand that other general-purpose components may be further included in addition to the components illustrated in FIG. 10.

The processor 1010 may control the overall operation of the device 1000. For example, the processor 1010 may control the memory 1020, a communication module (not shown), an input unit (not shown) and/or output unit (not shown), or the like by executing programs stored in the memory 1020. The processor 1010 may control the operations of the device 1000 by executing the programs stored in the memory 1020.

The processor 1010 may control at least some of the operations of the device 1000 described above with reference to FIGS. 1 through 9. For example, the processor 1010 may generate an input sequence by encoding input data, generate a reference sequence based on the input sequence using a first decoder, generate a first verification sequence based on the input sequence and the reference sequence using a second decoder, determine whether a preset end condition is satisfied based on the reference sequence and the first verification sequence, and based on the end condition not being satisfied, update the reference sequence based on the input sequence using the second decoder.

Meanwhile, specific examples of how the processor 1010 operates are the same as those described above with reference to FIGS. 1 through 9. Therefore, a detailed description of the operations of the processor 1010 is omitted here.

The processor 1010 may be implemented using at least one of application-specific integrated circuits (ASICs), digital signal processors (DSPs), digital signal processing devices (DSPDs), programmable logic devices (PLDs), field-programmable gate arrays (FPGAs), controllers, micro-controllers, microprocessors, and other electrical units for performing functions.

The memory 1020, which is hardware for storing various data processed in the device 1000, may store programs for processing and controlling various operations of the processor 1010.

The memory 1020 may include a random-access memory (RAM) such as a dynamic RAM (DRAM) or static RAM (SRAM), a read-only memory (ROM), an electrically erasable programmable read-only memory (EEPROM), a compact disc read-only memory (CD-ROM), Blu-ray or other optical disk storage, a hard disk drive (HDD), a solid-state drive (SSD), or a flash memory.

Meanwhile, the device 1000 may include additional components in addition to the components illustrated in FIG. 10. For example, the device 1000 may further include the communication module. In one embodiment, the device 1000 may exchange information with at least one other device inside or outside the system 100 by controlling the communication module.

The communication module may include at least one component that enables the device 1000 to perform wired/wireless communication with the at least one other device. For example, the communication module may include, but is not limited to, a wired communication unit for implementing Ethernet, serial communication, or optical communication, and/or a wireless communication unit for implementing Wi-Fi, Bluetooth, or cellular network-based communication.

In one embodiment, the device 1000 may be a mobile electronic device. For example, the device 1000 may be implemented as a smartphone, tablet PC, PC, smart television (TV), personal digital assistant (PDA), laptop, media player, camera-equipped device, and other mobile electronic devices. The device 1000 may also be implemented as a wearable device such as a watch, (eye) glasses, a hair band, and a ring equipped with communication and data processing functions.

In another embodiment, the device 1000 may be an electronic device embedded in commercial products such as vehicle or home appliances. For example, the device 1000 may be an electronic device that is inserted into a commercial product through tuning after being produced.

In still another embodiment, the device 1000 may be a server device. The server device may be implemented as a computer device or multiple computer devices that communicate through a network to provide commands, code, files, content, services, or the like.

In one embodiment, the processes performed in the device 1000 may be distributed and performed by at least some of the mobile electronic device, the electronic device embedded in a commercial product, and the server device.

According to the technical solutions of the present disclosure described above, verifying a reference sequence may enable selective generation and application of a patch for a specific interval, thereby reducing the time required for the entire decoding process.

In addition, according to the technical solutions of the present disclosure described above, appropriately combining a teacher forcing mode and an autoregressive mode may secure a high processing speed while maintaining high accuracy.

The effects of the embodiments of the present disclosure are not limited to those described above, and other effects not described above will be clearly understood by those skilled in the art from the description of this specification.

Meanwhile, the embodiments of the present disclosure described above may be implemented in the form of a computer program that may be executed through various components on a computer, and such a computer program may be written on a non-transitory computer-readable medium. The medium may include a hard disk, a magnetic medium such as a floppy disk and magnetic tape, an optical recording medium such as CD-ROM and DVD, a magneto-optical medium such as a floptical disk, and a hardware device specifically configured to store and execute program instructions such as read-only memory (ROM), random-access memory (RAM), flash memory, or the like.

On the other hand, the computer program may be specially designed and configured for the present disclosure or may be available to those skilled in the field of computer software. Examples of this computer program may include, in addition to machine code such as that produced by a compiler, high-level language code that may be executed by a computer using an interpreter or the like.

According to one embodiment, the methods according to various embodiments of the present disclosure may be provided by being included in a computer program product. Such a computer program product may be traded between sellers and buyers as goods. The computer program product may be distributed in the form of a device-readable storage medium (e.g., compact disc read-only memory (CD-ROM)), or distributed directly between two user devices or distributed online (e.g., download or upload) through an application store (e.g., Play Store^{™}). In the case of online distribution, at least a portion of the computer program product may be at least temporarily stored or temporarily created on a device-readable storage medium, such as the memory of the server of a manufacturer, the server of an application store, or a relay server.

The steps or operations of all the methods described herein may be performed in any suitable order unless otherwise indicated herein or otherwise clearly contradicted by context. The present disclosure is not necessarily limited by the order of the steps. The use of all examples or exemplary terms (e.g., etc.) in the present disclosure is simply to describe the present disclosure in detail, and the scope of the present disclosure is not limited by these examples or exemplary terms unless limited by the appended claims. In addition, it may be appreciated by those skilled in the art that various modifications, combinations, and changes may be made according to design conditions and factors within the scope of the appended claims and their equivalents.

Therefore, the idea of the present disclosure should not be limited to the embodiments described above, but all those modified or changed within the scope of the appended claims or within all the scopes equal to or equivalent to the scope of the claims may belong to the scope of the idea of the present disclosure.

## Claims

1. A method of generating sequence data, comprising:
generating an input sequence by encoding input data;
generating a reference sequence based on the input sequence using a first decoder;
generating a first verification sequence based on the input sequence and the reference sequence using a second decoder;
determining whether a preset end condition is satisfied based on the reference sequence and the first verification sequence; and
based on the end condition not being satisfied, updating the reference sequence based on the input sequence, using the second decoder.

2. The method of claim 1, further comprising:
generating a second verification sequence based on the input sequence and the updated reference sequence, using the second decoder; and
determining whether the end condition is satisfied based on the updated reference sequence and the second verification sequence.

3. The method of claim 1,
wherein the determining comprises:
based on the end condition being satisfied, determining the reference sequence as an output sequence.

4. The method of claim 1,
wherein the updating comprises:
generating a patch based on the input sequence, using the second decoder; and
updating the reference sequence based on the reference sequence and the patch.

5. The method of claim 4,
wherein the generating of the first verification sequence comprises:
generating the first verification sequence using the second decoder in a teacher forcing mode,
wherein the generating of the patch comprises:
generating the patch using the second decoder in an autoregressive mode.

6. The method of claim 4,
wherein the patch comprises a preset or fewer number of tokens.

7. The method of claim 4,
wherein the generating of the patch comprises:
identifying an initial discrepancy position by comparing the reference sequence and the first verification sequence; and
generating the patch, starting from the initial discrepancy position.

8. The method of claim 7,
wherein the updating comprises:
updating the reference sequence by overwriting, with the patch, starting from the initial discrepancy position up to a reference position, within the reference sequence.

9. The method of claim 8,
wherein the reference position is, within a search range on the reference sequence set based on the initial discrepancy position, a position at which a token identical to a last token of the patch is initially identified or a last position of the reference sequence.

10. The method of claim 1,
wherein the end condition is that the first verification sequence comprises the reference sequence and an end token.

11. A device for generating sequence data, comprising:
a memory storing at least one program; and
a processor configured to operate by executing the at least one program,
wherein the processor is configured to:
generate an input sequence by encoding input data;
generate a reference sequence based on the input sequence using a first decoder;
generate a first verification sequence based on the input sequence and the reference sequence using a second decoder;
determine whether a preset end condition is satisfied based on the reference sequence and the first verification sequence; and
based on the end condition not being satisfied, update the reference sequence based on the input sequence, using the second decoder.

12. A non-transitory computer-readable recording medium that stores a program for executing, on a computer, the method of claim 1.
